(19) Europäisches Patentamt / European Patent Office / Office européen des brevets

(11) **EP 4 232 622 B1**

(12) **EUROPEAN PATENT SPECIFICATION**

(45) Date of publication and mention of the grant of the patent:
**19.11.2025 Bulletin 2025/47**

(21) Application number: **21801635.0**

(22) Date of filing: **22.10.2021**

(51) International Patent Classification (IPC):
*D01D 5/04* (2006.01)    *D01F 1/10* (2006.01)
*D01F 6/70* (2006.01)    *D01F 6/72* (2006.01)

(52) Cooperative Patent Classification (CPC):
**D01F 6/70; D01D 5/04; D01F 1/10; D01F 6/72**

(86) International application number:
**PCT/IB2021/059766**

(87) International publication number:
**WO 2022/084941 (28.04.2022 Gazette 2022/17)**

(54) **POLYURETHANE UREA ELASTIC FIBER AND PRODUCTION METHOD THEREFOR**

**ELASTISCHE POLYURETHANHARNSTOFFFASER UND HERSTELLUNGSVERFAHREN DAFÜR**

**FIBRE ÉLASTIQUE DE POLYURÉTHANE-URÉE ET PROCÉDÉ DE PRODUCTION ASSOCIÉ**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.10.2020 JP 2020177918**

(43) Date of publication of application:
**30.08.2023 Bulletin 2023/35**

(73) Proprietor: **Toray Opelontex Co., Ltd**
**Osaka 530-8222 (JP)**

(72) Inventors:
• **TAKAYAMA, Hiroshi**
  **Otsushi, Shiga 520-8558 (JP)**
• **HARA, Masashi**
  **Otushi, Shiga 520-8558 (JP)**

(74) Representative: **Carpmaels & Ransford LLP**
**One Southampton Row**
**London WC1B 5HA (GB)**

(56) References cited:
EP-A1- 1 170 407        WO-A1-2020/203434
JP-A- 2012 041 671      US-A- 5 166 232
US-A1- 2020 017 996

**Description**

[Technical Field]

The present invention relates to a polyurethane urea elastic fiber and a production method therefor.

[Background Art]

Polyurethane elastic fibers are roughly divided into polyurethane urethane elastic fibers in which a diol is used primarily as the chain extender and polyurethane urea elastic fibers in which a diamine is used primarily as the chain extender.

The former is characterized by high strength and high elasticity. Patent Document 1 discloses an example of a polyurethane urethane elastic fiber whose textile properties do not easily change over time.

The latter has high elasticity, but poor strength compared to the former. Also, because the textile properties of the fiber tend to change over time, problems arise in inventory control and processing condition management for the fiber, and it is difficult to obtain a fabric that has stable fabric characteristics and fabric quality. In other words, there is no polyurethane elastic fiber that has high strength and whose textile properties do not easily change over time while also retaining conventional characteristics.

In Patent Document 2, the stability of polyurethane urea during polymerization was studied with respect to polyurethane urea elastic fibers, an example of a polyurethane urea elastic fiber that uses a specific compound as a terminator was described, and it was disclosed that the increase in the viscosity of the polyurethane urea solution had been suppressed. Patent Document 3 discloses a polyurethane elastic fiber with high strength and elasticity, high recovery, and excellent light resistance obtained by adding a benzophenone-based UV absorber with one or more sulfonic acid groups in the molecule to the polyurethane elastic fiber. Document 4 discloses a polyurethane elastic fiber containing a polyurethane urea polymer having tertiary nitrogen groups at the terminals of the polymer and having a molecular weight controlled within a desired range, which simultaneously improves dyeability, heat resistance, heat setting and spinnability, and controls the occurrences of scum and yarn breakage.

[Prior Art Documents]

[Patent Documents]

[Patent Document 1] JP H11-081045 A

[Patent Document 2] JP 2003-155624 A

[Patent Document 3] JP 2011-144491 A

[patent Document 4] US 2020/017996 A.

[Summary of the Invention]

[Problem to Be Solved by the Invention]

There is no known polyurethane urea elastic fiber that has high strength and textile properties that do not easily change over time while retaining the characteristics of a conventional polyurethane urethane elastic fiber, or a method for obtaining such a polyurethane urea elastic fiber.

It is an object of the present invention to provide a polyurethane urea elastic fiber with high elasticity and excellent textile property stability over time by modifying the ends of the polyurethane urea polymer molecular chain, and to provide a method for producing such a polyurethane urea elastic fiber. It is another object of the present invention to provide a polyurethane urea elastic fiber that allows for easier inventory control and processing condition management of fibers when it is used, and that can be used to obtain fabrics with stable fabric characteristics and fabric quality, and to provide a method for producing such a polyurethane urea elastic fiber.

[Effect of the Invention]

Because the polyurethane urea elastic fibers of the present invention have high tensile strength and a low residual strain rate, clothes using these elastic fibers have a good fit and feel, and are easy to take off. Because these elastic fibers also have stable mechanical properties over time, they are easy to process in the covering, knitting, and weaving process, whether used alone or in combination with other types of fibers for higher-order processing.

[Mode for Carrying Out the Invention]

The following is a detailed description of the present invention.

First, the polyurethane ureas used in the present invention will be described. A polyurethane urea polymer having a molecular chain using a polymer diol, a diisocyanate, and an organic amine as starting materials, and having a primary or secondary amino group at both ends of the molecular chain is referred to below as "polyurethane urea polymer A," and a polyurethane urea polymer having a molecular chain using a polymer diol, a diisocyanate, and an organic amine, and having a sulfonic acid amine salt on at least one end of the molecular chain is referred to as "polyurethane urea polymer B."

Polyurethane urea polymer B includes those in which only one end has a sulfonic acid amine salt and those in which both ends have sulfonic acid amine salts. When only one end has a sulfonic acid amine salt, the other end has a primary or secondary amino group. Polyurethane urea polymer B can be obtained by reacting at least one end of polyurethane urea polymer A with a sulfonic acid compound to form a salt, but the production method is not limited to this example.

Polyurethane urea polymer A and polyurethane urea polymer B are sometimes referred to collectively as "the polyurethane urea polymers," and a mixture of polyurethane urea polymers containing polyurethane urea polymer A and polyurethane urea polymer B is referred to as a "polyurethane urea polymer mixture."

Any method can be used to obtain a mixture of polyurethane urea polymers containing polyurethane urea polymer A and polyurethane urea polymer B, and there are no particular restrictions. For example, polyurethane urea polymer A and polyurethane urea polymer B can be prepared individually and the two can be mixed together to obtain a polyurethane urea polymer mixture. Another example is reacting a sulfonic acid compound with an excess amount of polyurethane urea polymer A to prepare a certain amount of polyurethane urea polymer B while leaving behind some polyurethane urea polymer A and obtaining a polyurethane urea polymer mixture.

There are no particular restrictions on the polyurethane urea polymer A and polyurethane urea polymer B used in the present invention as long as they have a polymer diol, a diisocyanate, and an organic amine as starting materials (as mentioned above, polyurethane urea polymer A and polyurethane urea polymer B are sometimes referred to collectively as "the polyurethane urea polymers"). Here, having a polymer diol, a diisocyanate, and an organic amine as starting materials means the resulting polyurethane polymer has a structure derived from each component. In other words, in the present specification, the structure of polyurethane polymers obtained using a polymer diol, a diisocyanate, and an organic amine as starting materials are specified, but equivalent structures may be formed from different raw materials, and the raw materials themselves are not specified. Similarly, even when the same raw materials are used for synthesis, there are no particular restrictions on the synthesis method. For example, it may be a polyurethane urea polymer composed of a polymer diol, a diisocyanate, and a low molecular weight diamine, or a polyurethane urea polymer using a polymer diol, a diisocyanate, and a compound having a hydroxyl group and an amino group in the molecule as a chain extender. Also, two or more polyurethane urea polymers having different starting materials may be mixed together at any ratio. A polyfunctional glycol or isocyanate having trifunctionality or a higher functionality is preferably used as long as the effects of the present invention are not impaired.

Structural units typically used to compose a polyurethane urea polymer of the present invention will now be described.

A polyether diol, a polyester diol, or a polycarbonate diol are preferred as the polymer diol used as a structural unit composing the polyurethane urea polymers. A polyether diol is especially preferred from the standpoint of imparting flexibility and elasticity to the fiber.

Preferred examples of polyether diols include polyethylene oxide, polyethylene glycol, polyethylene glycol derivatives, polypropylene glycol, polytetramethylene ether glycol (PTMG), modified PTMG (3M-PTMG) that is a copolymer with tetrahydrofuran (THF) and 3-methyltetrahydrofuran, modified PTMG that is a copolymer with THF and 2,3-dimethyl THF, the polyol with side chains on both sides that is disclosed in JP 2615131 B2, and a random copolymer in which THF and ethylene oxide and/or propylene oxide are irregularly arranged. One or more of these polyether diols may be mixed together or copolymerized and then used.

From the standpoint of obtaining wear resistance and light resistance, preferred examples include butylene adipate, polycaprolactone diol, polyester diols such as the polyester polyol with a side chain disclosed in JP S61-026612 A, and the polycarbonate diol disclosed in JP H02-289516 A.

These polymer diols may be used alone, or two or more may be mixed together or copolymerized and then used.

From the standpoint of obtaining elasticity, strength, and heat resistance when made into a fiber, the number average molecular weight of the polymer diol is preferably 1,000 or more and 8,000 or less, and more preferably 1,800 or more and 6,000 or less. When a polyol with a molecular weight in this range is used, elastic fibers having excellent elasticity, strength, elastic resilience, and heat resistance can be readily obtained. The molecular weight is measured by GPC and converted in terms of polystyrene.

Aromatic diisocyanates are especially suitable for synthesizing polyurethanes with high heat resistance and strength. Examples include diphenylmethane diisocyanate (MDI), tolylene diisocyanate, 1,4-diisocyanate benzene, xylylene diisocyanate, and 2,6-naphthalene diisocyanate. Preferred examples of alicyclic diisocyanates include methylenebis (cyclohexyl isocyanate) (H12MDI), isophorone diisocyanate, methylcyclohexane 2,4-diisocyanate, methylcyclohexane 2,6-diisocyanate, cyclohexane 1,4-diisocyanate, hexahydroxylylene diisocyanate, hexahydrotolylene diisocyanate, and octahydro-1,5-naphthalenediisocyanate. Aliphatic diisocyanates are especially effective for suppressing the yellowing of polyurethane urea elastic fibers. These diisocyanates may be used alone or in combinations of two or more.

The chain extender used to synthesize a polyurethane urea polymer from a polymer diol and a diisocyanate is preferably at least one type of low molecular weight amine having two or more amino groups. Especially preferred is a low molecular weight diamine with two amino groups. The molecule may also have a hydroxyl group and an amino group such as ethanolamine.

Preferred examples of low molecular weight diamines include ethylenediamine, 1,2-propanediamine, 1,3-propanediamine, hexamethylenediamine, p-phenylenediamine, p-xylenediamine, m-xylylenediamine, p,p'-methylenedianiline, 1,3- cyclohexyldiamine, hexahydromethphenylenediamine, 2-methylpentamethylenediamine, and bis (4-aminophenyl) phosphine oxide. These may be used alone or in combinations of two or more. Ethylenediamine is especially preferred. Ethylenediamine can be used to readily obtain a fiber having excellent elasticity, elasticity recovery, and heat resistance. A triamine compound that can form a crosslinked structure, such as diethylenetriamine, may be added to these chain extenders as long as the effects of the present invention are not lost.

In addition, one or more of the following compounds are preferably mixed with or added to the polyurethane urea polymers. Preferred end blockers include monoamines such as dimethylamine, diisopropylamine, ethylmethylamine, diethylamine, methylpropylamine, isopropylmethylamine, diisopropylamine, butylmethylamine, isobutylmethylamine, isopentylmethylamine, dibutylamine, and diamylamine.

From the standpoint of obtaining fibers with high durability and strength, the number average molecular weight of a polyurethane urea polymer used in the present invention is preferably in the range of 30,000 or more and 150,000 or less. The molecular weight is measured by GPC and converted in terms of polystyrene.

The present invention, according to claim 1, is a polyurethane urea elastic fiber containing polyurethane urea polymer A having a molecular chain using a polymer diol, a diisocyanate, and an organic amine as starting materials, and a primary or secondary amino group on both ends of the molecular chain, and polyurethane urea polymer B having a molecular chain using a polymer diol, a diisocyanate, and an organic amine, and having a sulfonic acid amine salt on at least one end of the molecular chain wherein polyurethane urea polymer B is a polyurethane urea polymer having a sulfonic acid compound with a molecular weight of 96 or more and 300 or less bonded to at least one of a primary or a secondary amino group present at the end of the molecular chain of polyurethane urea polymer A.

When a polyurethane urea elastic fiber contains polyurethane urea polymer A with a primary or secondary amino group on both ends of the molecular chain, and polyurethane urea polymer B with a sulfonic acid amine salt on at least one end of the molecular chain, a polyurethane urea elastic fiber can be obtained that has high strength that does not impair the inherent elasticity of polyurethane urea elastic fibers, and that has stable textile characteristics over time.

The polyurethane urea polymer B with a sulfonic acid amine salt on at least one end of the molecular chain is preferably obtained by reacting a sulfonic acid compound with at least one of the primary or secondary amino groups present on the end of the molecular chain of polyurethane urea polymer A.

Examples of polyurethane urea polymer B include those having at least one end represented by formula (1) below.

[Formula 1]

(In this formula, the tilde ("~") represents a molecular chain using a polymer diol, a diisocyanate, and an organic amine as starting materials, and R1 and R2 each independently represent H or a substituent. R3 represents a substituent.)

To provide a more specific explanation using an example, when p-toluenesulfonic acid monohydrate (PTSA) is used as the counter anion to the amino group in a polyurethane urea polymer A having a primary amino group as an end group, the resulting polyurethane urea polymer B is represented by formula (2) below.

[Formula 2]

(In this formula, the tilde ("~") represents a molecular chain using a polymer diol, a diisocyanate, and an organic amine as starting materials.)

In the present invention, the compound used to form a sulfonic acid amine salt at the end of the polyurethane urea polymer with primary or secondary amino groups at both ends of the molecular chain is preferably a sulfonic acid compound. In the present invention, sulfonic acid compound refers to a compound with a sulfonic acid group. Here, the H in the sulfonic acid group may be in a dissociated state, and the sulfonic acid compound may be a hydrate.

From the standpoint of optimizing stereoselectivity at the ends of a polyurethane urea polymer with primary or secondary amino groups at both ends of the molecular chain and optimizing the steric hindrance of the polyurethane urea polymer with the molecular chain, the sulfonic acid compound preferably has a molecular weight of 96 or more and 300 or less. More preferably, the molecular weight is 96 or more and 200 or less.

Examples of sulfonic acid compounds include aliphatic sulfonic acids such as methane sulfonic acid, ethane sulfonic acid, decane sulfonic acid, octadecane sulfonic acid, and cyclohexyl sulfonic acid, aromatic sulfonic acids such as benzene sulfonic acid, naphthalene sulfonic acid, p-toluene sulfonic acid, phenol sulfonic acid, monochlorobenzene sulfonic acid, an anthraquinone sulfonic acid, and unsaturated aliphatic sulfonic acid such as vinyl sulfonic acid, dodecene sulfonic acid, tetradecene sulfonic acid, and hexadecene sulfonic acid. Another example is a sulfobetaine having both a sulfonic acid serving as the anionic group and an ammonium salt serving as the cationic group in the molecule. These sulfonic acid compounds may have any substituent as long as the textile characteristics of the polyurethane urea elastic fiber are not lowered from the conventional level, and these may be used alone or in combinations of two or more. Especially preferred as sulfonic acids are aliphatic sulfonic acids and aromatic sulfonic acids.

In the present invention, from the standpoint of improving the yield of polyurethane urea polymer B, the polyurethane urea polymer prior to formation of the sulfonic acid amine salt preferably has a primary or secondary amino group as a molecular chain end group, and more preferably a primary amino group.

The amount of sulfonic acid amine salt in the polyurethane urea polymer B described above is preferably in the range of 0.01 mmol or more and 50 mmol or less per kilogram of polyurethane urea elastic fiber. When the amount of sulfonic acid amine salt is 0.01 mmol or more per kilogram of polyurethane urea elastic fiber, enough sulfonic acid amine salt is present to improve the strength of the polyurethane urea elastic fibers. From the standpoint of obtaining a polyurethane urea elastic fiber with better elastic properties, the amount of sulfonic acid amine salt per kilogram of polyurethane urea elastic fiber is preferably in the range of 0.05 mmol or more and 25 mmol or less. The sulfonic acid amine salt content of polyurethane urea elastic fibers can be identified and quantified using various analytical methods such as 1H-NMR, elemental analysis, and ion chromatography.

In the present invention, from the standpoint of realizing good spinnability from a spinning stock solution when obtaining polyurethane urea elastic fibers as well as both elasticity in the final polyurethane urea elastic fibers and stable textile properties over time, the polyurethane urea elastic fiber preferably contains polyurethane polymer C which has a tertiary amine in the molecular structure.

Examples of polyurethanes with a tertiary amine in the molecular structure that can be added include polyurethanes and/or polyurethane urea polymers containing a tertiary nitrogen-containing diol and/or a tertiary nitrogen-containing diamine and a diisocyanate. A polymer having an N, N-dialkyl semicarbazide end group can also be added to these polymers. Compounds having a tertiary nitrogen in the main chain and N,N-dialkyl semicarbazide at the ends can exhibit high heat resistance during staining even at low concentrations of N, N-dialkyl semicarbazide, and can be given higher strength and elasticity than when it is not added.

Specific examples of preferred tertiary nitrogen-containing diols that can be used include N-methyl-N,N-diethanolamine, N-methyl-N,N-dipropanolamine, N-methyl-N,N-diisopropanolamine, N-butyl-N,N-diethanolamine, N-t-butyl-N,N-diethanolamine, N-octadecane-N,N-diethanolamine, N-benzyl-N,N-diethanolamine, N-t-butyl-N,N-diisopropanolamine, and piperazine derivatives such as bishydroxyethyl piperazine and bishydroxyisopropyl piperazine. Especially preferred is N-t-butyl-N,N-diethanolamine or N-benzyl-N, N-diethanolamine.

Specific examples of preferred tertiary nitrogen-containing diamines that can be used include N-methyl-3,3'-iminobis (propylamine), N-butyl-aminobis-propylamine, N-methyl-aminobis-ethylamine, N-t-butyl-aminobis-propylamine, piperazin-N,N'-bis (3-aminopropyl), and piperazin-N,N'-bis (2-aminoethyl). Especially preferred is N-methyl-3,3'-iminobis (propylamine) or piperazine-N, N'-bis (3-aminopropyl).

Specific examples of preferred diisocyanates that can be used in polyurethanes and/or polyurethane urea polymers containing a tertiary nitrogen-containing diol and/or a tertiary nitrogen-containing diamine include aliphatic diisocyanates such as methylene-bis (4-cyclohexyl isocyanate), isophorone diisocyanate, lysine diisocyanate, and DDI derived from dimer acid. Especially preferred is methylene-bis (4-cyclohexyl isocyanate) or isophorone diisocyanate.

Preferably the end group of the polyurethane or the polyurethane urea polymer is able to form a semicarbazide group. When the end group reacts with a diisocyanate to form a semicarbazide end group, a substituted hydrazine is preferably used. Specific examples of preferred substituted hydrazine include N,N-dimethylhydrazine, N,N-diethylhydrazine, N,N-dipropylhydrazine, N,N-diisopropylhydrazine, N,N-dibutylhydrazine, N,N-diisobutylhydrazine, N,N-dihydroxyethylhydrazine, and N,N-dihydroxyisopropylhydrazine. Especially preferred is N,N-dimethylhydrazine or N,N-dihydroxyethylhydrazine.

Especially preferred examples of polyurethanes and/or polyurethane urea polymers containing a tertiary nitrogen-containing diol and/or a tertiary nitrogen-containing diamine and a diisocyanate include a polyurethane or N-t-butyl-N, N-diethanolamine produced by a reaction with N-t-butyl-N,N-diethanolamine and methylene-bis (4-cyclohexylisocyanate), a polyurethane with N, N-dimethylhydrazine reacted on the end with a polyurethane produced by a reaction with methylene-bis (4-cyclohexyl isocyanate), and a polyurea produced by a reaction with N-methyl-3,3'-iminobis (propylamine) and methylene-bis (4-cyclohexylisocyanate). There are no particular restrictions on the reaction ratio of N-t-butyl-N, N-diethanolamine to methylene-bis (4-cyclohexylisocyanate) as long as the effects of the present invention are not impaired. However, a reaction ratio of about 1:1.05 is preferred. In this case, the total concentration of urethane groups and urea groups in the alternating copolymer is about 5.1 mol/kg.

A polyurethane urea elastic fiber of the present invention may contain various additives such as stabilizers and pigments. Preferred examples of light stabilizers and antioxidant include hindered phenolic agents such as BHT and Sumilyzer (registered trademark) GA-80 from Sumitomo Chemical Co., Ltd., benzotriazole-based and benzophenone-based agents such as Tinuvin (registered trademark) from Ciba Geigy Co., Ltd., phosphorus-based agents such as Sumilyzer (registered trademark) P-16 from Sumitomo Chemical Co., Ltd., hindered amine agents, pigments such as iron oxide and titanium oxide, minerals such as hydrotalcite compounds, huntite, hydromagnesite, and tourmaline, inorganic materials such as zinc oxide, cerium oxide, magnesium oxide, calcium carbonate, and carbon black, fluorine-based or silicone-based resin powders, metal soaps such as magnesium stearate, disinfectants and deodorizers containing silver, zinc, or compounds of these, lubricants such as silicones and mineral oils, and antistatic agents such as cerium oxide, betaine, and phosphoric acid. These are preferably reacted with the polymers. In order to improve durability with respect to light and various types of nitrogen oxides, a nitrogen oxide supplement such as HN-150 from Nippon Hydrazine Co., Ltd., a thermal oxidation stabilizer such Sumilyzer (registered trademark) GA-80 from Sumitomo Chemical Co., Ltd., or a light stabilizer such as Sumisorb (registered trademark) 300 #622 from Sumitomo Chemical Co., Ltd. is preferably used. In order to improve dispersibility in the fiber to stabilize the spinning process when these stabilizers and pigments are used, an inorganic agent is preferably used which has been surface-treated with organic substances such as fatty acids, fatty acid esters, and polyol-based organic substances, silane-based coupling agents, titanate-based coupling agents, or mixtures thereof.

The method, according to claim 4, for producing a polyurethane urea elastic fiber of the present invention will now be explained in detail.

In the present invention, the method comprises: dry spinning a spinning solution containing polyurethane urea polymer A having a molecular chain using a polymer diol, a diisocyanate, and an organic amine as starting materials, and polyurethane urea polymer B having a molecular chain using a polymer diol, a diisocyanate, and an organic amine, and having a sulfonic acid amine salt on at least one end of the molecular chain, wherein: ,

(a) spinning stock solution a containing polyurethane urea polymer A having a molecular chain using a polymer diol, a diisocyanate, and an organic amine as starting materials, and having an amino group at both ends of the molecular chain is prepared, and a sulfonic acid compound with a molecular weight of 96 or more and 300 or less is added to spinning stock solution a and reacted to turn some of polyurethane urea polymer A in spinning stock solution a into polyurethane urea polymer B and obtain a spinning solution; or ,

(b) spinning stock solution a containing polyurethane urea polymer A having a molecular chain using a polymer diol, a diisocyanate, and an organic amine as starting materials, and having an amino group at both ends of the molecular chain is prepared, some of spinning stock solution a is divided, a sulfonic acid compound with a molecular weight of 96 or more and 300 is added to and reacted with one of the divided portions to prepare spinning stock solution b in which polyurethane urea polymer B has been produced, and a spinning solution obtained by mixing together spinning stock solution a and spinning stock solution b is dry spun.

In the present invention, a spinning stock solution containing polyurethane urea polymer A and polyurethane urea polymer B obtained using polymer diols, diisocyanates, and organic amines is dry spun.

Any method can be used to prepare the spinning stock solution containing polyurethane urea polymer A and polyurethane urea polymer B.

For example, a spinning stock solution a containing polyurethane urea polymer A and a spinning stock solution b containing polyurethane urea polymer B can be prepared separately, and the two can be mixed together to obtain a spinning solution. When the spinning solution is obtained using this method, some of spinning stock solution a containing polyurethane urea polymer A can be divided and one of the divided portions reacted with an added sulfonic acid compound having a molecular weight of 96 or more and 300 or less to prepare spinning stock solution b in which polyurethane urea polymer B has been produced.

In another method, a spinning stock solution a containing polyurethane urea polymer A can be produced, spinning stock solution a can be reacted with an added sulfonic acid compound having a molecular weight of 96 or more and 300 or less to turn some of the polyurethane urea polymer A in spinning stock solution a into polyurethane urea polymer B, and prepare a spinning solution containing polyurethane urea polymer A and polyurethane urea polymer B.

Methods that can be used to obtain a spinning solution containing polyurethane urea polymer A and polyurethane urea polymer B include (i) adding a deficient equivalent amount of sulfonic acid compound to the primary or secondary amino groups present at the end of the molecular chain of polyurethane urea polymer A to complete a reaction and obtain a spinning solution containing polyurethane urea polymers in which polyurethane urea polymer A and polyurethane urea polymer B are mixed together, and (ii) adding a sulfonic acid compound and not completing the reaction to obtain a spinning solution containing polyurethane urea polymers in which polyurethane urea polymer A and polyurethane urea polymer B are mixed together. In the case of (ii), some of the unreacted sulfonic acid compound may remain in the spinning solution.

The melt polymerization method, the solution polymerization method, or some other method may be used to prepare the polyurethane urea polymers that are solutes in the solution. However, the solution polymerization method is more preferred. In the solution polymerization method, not many foreign substances such as gels are produced in the polyurethane urea polymers, the spinning solution is easy to spin, and a polyurethane urea elastic fiber with a low degree of fineness is easy to obtain. Of course, the solution polymerization method is also advantageous in that a step of making a solution can be omitted.

A polyurethane urea polymer that is especially suitable for the present invention is synthesized using PTMG with a number average molecular weight of 1800 or more and 6000 or less as the polymer diol, MDI as the diisocyanate, and at least one type among ethylenediamine, 1,2-propanediamine, 1,3-propanediamine, and hexamethylenediamine as the chain extender.

A polyurethane urea polymer can be obtained by synthesizing the raw materials mentioned above in a solvent such as DMAc, DMF, DMSO, NMP, or one containing any of these as the main component. Preferred methods include the so-called one-shot method, in which the raw materials are added to a solvent, dissolved, heated to an appropriate temperature, and reacted to form a polyurethane urea polymer, and a method in which a polymer diol and diisocyanate are melt-reacted, and the reaction product is dissolved in a solvent and reacted with the chain extender to obtain a polyurethane urea polymer.

When the molecular weight of the polymer diol is 1800 or more, the polymerization is preferably conducted at a ratio of (moles of MDI)/(moles of polymer diol) $\geq$ 1.5 in order to raise the melting point on the high side to 200°C or more.

In synthesizing these polyurethanes, one type or a mixture of two or more types of catalysts such as amine catalysts and organometallic catalysts is preferably used.

Examples of amine catalysts include N,N-dimethylcyclohexylamine, N,N-dimethylbenzylamine, triethylamine, N-methylmorpholine, N-ethylmorpholine, N,N,N',N'-tetramethylethylenediamine, N,N,N',N'-tetramethyl-1,3-propanediamine, N,N,N',N'-tetramethylhexanediamine, bis-2-dimethylaminoethyl ether, N,N,N',N',N'-pentamethyldiethylenetriamine, tetramethylguanidine, triethylenediamine, N,N'-dimethylpiperazine, N-methyl-N'-dimethylaminoethyl-piperazine, N-(2-dimethylaminoethyl) morpholine, 1-methylimidazole, 1,2-dimethylimidazole, N,N-dimethylaminoethanol, N,N,N'-trimethylaminoethylethanolamine, N-methyl-N'-(2-hydroxyethyl) piperazine, 2,4,6-tris (dimethylaminomethyl) phenol, N,N-dimethylaminohexanol, and triethanolamine.

Examples of organometallic catalysts include tin octanoate, dibutyl tin dilaurate, and lead dibutyl octanoate.

The concentration of polyurethane urea polymers in the resulting polyurethane urea polymer solution is preferably in the range of 30% by weight or more and 80% by weight or less.

In the present invention, a sulfonic acid compound is added to polyurethane urea polymer A solution to obtain a polyurethane urea polymer solution containing polyurethane urea polymer B. Any method can be used to add a sulfonic acid to polyurethane urea polymer A solution. Typical methods include using a static mixer, stirring, using a homomixer, and using a twin-screw extruder.

Any of the following reaction conditions can be applied to a polyurethane urea polymer solution to which a sulfonic acid compound has been added. Reaction conditions include the temperature, the time, and the presence or absence of a catalyst. There are no particular restrictions because the reaction conditions depend on the reactivity of the sulfonic acid compound with the end groups of polyurethane urea polymer A. However, the polyurethane urea polymer A and the sulfonic acid compound may be stirred at 10 to 40°C for 0.5 to 2 hours before spinning to obtain polyurethane urea polymer B, which is then spun to obtain a polyurethane urea elastic fiber. Also, polyurethane urea polymer A and the sulfonic acid compound may be mixed together before spinning, and polyurethane urea elastic fibers may be obtained in which polyurethane urea polymer B was produced by reactive spinning under spinning conditions of 100 to 300°C for 10 seconds with the unreacted polyurethane urea polymer A and sulfonic acid compound.

From the standpoint of controlling the viscosity of the polyurethane urea polymer solution to perform spinning according to the spinning conditions, one or more of the following may be mixed in: monoamines such as dimethylamine, diisopropylamine, ethylmethylamine, diethylamine, methylpropylamine, isopropylmethylamine, diisopropylamine, butylmethylamine, isobutylmethylamine, isopentylmethylamine, dibutylamine, and diamylamine, or monools such as ethanol, propanol, butanol, isopropanol, allyl alcohol, and cyclopentanol.

A basic fiber of the present invention can be obtained, for example, using dry spinning, wet spinning, or melt spinning a spinning stock solution described above, and then winding the fiber. Dry spinning is especially preferred from the standpoint of stable spinning at all finenesses from thin to thick.

There are no particular restrictions on the fineness or cross-sectional profile of a polyurethane urea elastic fiber of the present invention. For example, the cross-sectional profile of the fibers may be circular or flat.

There are no particular restrictions on the dry spinning method, and spinning may be performed after selecting the appropriate spinning conditions for the desired characteristics and the spinning equipment.

For example, because the permanent strain rate and stress relaxation of a polyurethane urea elastic fiber of the present invention are particularly susceptible to the speed ratio between the godet roller and the winder, the spinning conditions are preferably determined based on the intended use for the fiber. From the standpoint of obtaining a polyurethane urea elastic fiber with the desired permanent strain rate and stress relaxation, take up is preferably conducted at a speed ratio between the godet roller and the winder in the range of 1.10 or more and 1.65 or less. Also, from the standpoint of improving the strength of the resulting polyurethane urea elastic fiber, the spinning speed is preferably 250 m/min or more.

[Examples]

The present invention will now be described in greater detail with reference to examples. However, the present invention is not limited to these examples.

< Method for Preparing Polyurethane Urea Polymer A >

A DMAc solution of polyurethane urea polymer A composed of PTMG with a molecular weight of 1,800, MDI, ethylenediamine as a chain extender, and diethylamine as an end blocker (concentration 35% by mass) was prepared in the usual manner, and this solution was designated as a1.

A DMAc solution of polyurethane urea polymer A composed of 3M-PTMG with a molecular weight of 3,500, MDI, ethylenediamine as a chain extender, and diethylamine as an end blocker (concentration 35% by mass) was prepared in the usual manner, and this solution was designated as a2.

< Method for Preparing Polyurethane Urea Polymer B >

From 1 to 10% by weight of the DMAc solution (concentration 35% by mass) of the sulfonic acid compound was added to from 90 to 99% by weight of the DMAc solution (concentration 35% by mass) of polyurethane urea polymer A, and the two were mixed together uniformly. Mixing was continued for 0.5 to 2 hours at 20-40°C under a nitrogen atmosphere to obtain a DMAc solution m1 of a mixture of polyurethane urea polymer B in which the amine end group of polyurethane urea polymer A has been chlorinated with a sulfonic acid amine, and a sulfonic acid amine salt without a polyurethane urea structure (concentration 35% by mass). The sulfonic acid amine salt without a polyurethane urea structure in m1 was a compound in which a low molecular weight amine, which was a residual monomer from the polyurethane urea polymer A production process, was chlorinated with a sulfonic acid amine.

Hexane extraction and toluene washing was repeated on m1 described above to remove the sulfonic acid amine salt without a polyurethane urea structure and obtain a solid polyurethane urea polymer B. The solid polyurethane urea polymer B was dissolved in DMAc to prepare a DMAc solution of polyurethane urea polymer B (concentration 35% by mass), which was designated as b1.

< Method for Preparing Polyurethane Having a Tertiary Amine in the Molecular Structure >

A DMAc solution of a polyurethane (Metachlor (registered trademark) 2462 from DuPont) (concentration 35% by mass) produced by the reaction between t-butyldiethanolamine and methylene-bis-(4-cyclohexylisocyanate) was prepared, and this was designated as t1.

< Amount of Sulfonic Acid Amine Salt per Kilogram of Polyurethane Urea Elastic Fiber >

The amount of sulfonic acid amine salt per kilogram of polyurethane urea elastic fiber was obtained by identifying the structure of the sulfonic acid amine salt using 1H-NMR, and then calculating the amount using ion chromatography based on the ratio of the amine sulfonate fraction in the polyurethane urea polymer.

< Evaluation Methods >

[1] Elastic Fiber Properties

In order to measure the basic characteristics and stability over time of the elastic fibers, a tensile test was carried out on a sample fiber using an Instron 4502 tensile tester under the following conditions.

First, a 5 cm (L1) sample was elongated by 300% five times at a tensile rate of 50 cm/min, and the stress after elongation by 300% the fifth time was defined as (G1). The sample length was then held at elongation of 300% for 30 seconds. The stress after holding the elongated fiber for 30 seconds was defined as (G2). Next, when the elongated sample was restored and the stress had reached 0, the length of the sample was defined as (L2). The sample was then elongated for a sixth time until it broke. The stress at break was defined as (G3), and the sample length at break was defined as (L3). Also, the strain and stress at the time of recovery after holding the elongated sample for 30 seconds for the fifth time was plotted and a curve was drawn. The stress under 200% strain was calculated as (P-200), and the strength in the actual usage range of the expansion and contraction characteristics at a predetermined fineness (22 dtex) was calculated as (G4).

The number of measurements was n = 3, and the average value was used to calculate the characteristics described above.

(1) Basic Properties of the Elastic Fiber

The basic characteristics of an elastic fiber are breaking strength, elongation at break, and permanent strain rate, and these were measured.

These characteristics were calculated using the following equations.

· Breaking strength (cN) = (G3)

· Elongation at break

$$(\%) = 100 \times ((L3)-(L1))/(L1)$$

· Permanent strain rate

$$(\%) = 100 \times ((L2)-(L1)) / (L1)$$

(2) Elastic Fiber Stability Over Time

The change in strength over time in the actual usage range and the change in strain rate over time were measured as the stability of the elastic fiber over time. The day on which the test fiber was collected after spinning was set as day 0. After storage at a temperature of 21°C and a humidity of 60%, the physical characteristics of the test fiber were measured after one day and after three months, and the characteristics were calculated using the following equations.

· Change in strength over time in the actual usage range (%) = [(strength of the fiber in the actual usage range three months after spinning)/(strength of the fiber in the actual usage range one day after spinning)] $\times$ 100

· Change in strain rate over time (%) = [(permanent strain rate of the fiber three months after spinning)/(permanent strain rate of the fiber one day after spinning)] $\times$ 100

At this time, the strength in the actual usage range was calculated using the following equation.

· Strength in the actual usage range

$$(cN) = (G4)$$

Here, a smaller difference in the physical property values of the polyurethane urea elastic fiber one day and three months after spinning indicates better stability over time. The change in strength over time in the actual usage range and the change in strain rate over time were evaluated using the following criteria: 90% or more and less than 120% means especially excellent stability over time (◎), 85% or more and less than 90% or 120% or more and less than 125% means excellent stability over time (○), and less than 85% or more than 125% means residual problems with stability over time (×).

[2] Spinnability of Elastic Fibers

Spinning was continuously performed for 48 hours, and the number of broken fibers after that time was used as an index for determining spinnability. After continuous spinning for 48 hours, less than two fiber breaks was considered excellent (◎). More than two fiber breaks over 48 hours but less than two fiber breaks over 24 hours was considered good (○).

[Example 1]

The method in < Method for Preparing Polyurethane Urea Polymer A > was used to prepare a1 as a DMAc solution of polyurethane urea polymer A.
The method in < Method for Preparing Polyurethane Urea Polymer B > was then used to prepare 1b1 as a DMAc solution b1 of polyurethane urea polymer B.

· PTSA was used as the sulfonic acid compound to prepare s1 as a DMAc solution of the sulfonic acid compound.

· 1b1 was prepared consisting of a1 and s1.

When 1b1 was prepared, a1 was added in an amount of 99% by weight and s1 was added in an amount of 1% by weight, and the mixture was uniformly mixed together and then mixed at 25°C for 1 hour. In 1b1, the amount of sulfonic acid amine salt with a polyurethane urea structure per kilogram of polyurethane urea polymer was 1.0 mmol.
A solution of a polyurethane polymer with a tertiary amine in its molecular structure t1 was prepared as another developing agent.
Solutions a1, 1b1 and t1 were uniformly mixed together at 98.98% by weight, 0.02% by weight and 1.0% by weight, respectively, to obtain a spinning stock solution, and this spinning stock solution was dry-spun and wound at a spinning speed of 600 m/min with the godet roller and winder speed ratio set at 1.2, to obtain a 22 dtex, 2 fil multifilament polyurethane elastic fiber. The composition of this polyurethane urea elastic fiber is shown in Table 1, and the properties of this fiber are shown in Table 2.

[Example 2]

Solutions a1, 1b1 and t1 were uniformly mixed together at 98.9% by weight, 0.1% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Example 3]

Solutions a1, 1b1 and t1 were uniformly mixed together at 96.0% by weight, 3.0% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Example 4]

Solutions a1, 1b1 and t1 were uniformly mixed together at 79.0% by weight, 20.0% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Example 5]

Solutions a1, 1b1 and t1 were uniformly mixed together at 59.0% by weight, 40.0% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Example 6]

Solutions a1, 1b1 and t1 were uniformly mixed together at 39.0% by weight, 60.0% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Example 7]

Instead of using s1, 2-morpholine ethanesulfonic acid was used to prepare a DMAc solution of a sulfonic acid compound s2 using the method described in Example 1. Next, 1b2 composed of a1 and s2 was prepared as b1 which is the DMAc solution of polyurethane urea polymer B. In 1b2, the amount of sulfonic acid amine salt with a polyurethane urea structure was 1.0 mmol per kilogram of polyurethane urea polymer.
Solutions a1, 1b2 and t1 were uniformly mixed together at 98.9% by weight, 0.1% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Example 8]

Instead of using s1, methanesulfonic acid was used to prepare a DMAc solution of a sulfonic acid compound s3 using the method described in Example 1. Next, 1b3 composed of a1 and s3 was prepared as b1 which is the DMAc solution of polyurethane urea polymer B. In 1b3, the amount of sulfonic acid amine salt with a polyurethane urea structure was 1.0 mmol per kilogram of polyurethane urea polymer.
Solutions a1, 1b3 and t1 were uniformly mixed together at 98.9% by weight, 0.1% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Example 9]

Instead of using s1, 2-hydroxy-4-methoxybenzophenone-5-sulfonic acid monohydrate was used to prepare a DMAc solution of a sulfonic acid compound s4 using the method described in Example 1. Next, 1b4 composed of a1 and s4 was prepared as b1 which is the DMAc solution of polyurethane urea polymer B. In 1b4, the amount of sulfonic acid amine salt with a polyurethane urea structure was 1.0 mmol per kilogram of polyurethane urea polymer.
Solutions a1, 1b4 and t1 were uniformly mixed together at 98.9% by weight, 0.1% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Example 10]

Instead of using s1, 3-amino-1-propanesulfonic acid was used to prepare a DMAc solution of a sulfonic acid compound s5 using the method described in Example 1. Next, 1b5 composed of a1 and s5 was prepared as b1 which is the DMAc solution of polyurethane urea polymer B. In 1b5, the amount of sulfonic acid amine salt with a polyurethane urea structure was 1.0 mmol per kilogram of polyurethane urea polymer.
Solutions a1, 1b5 and t1 were uniformly mixed together at 98.9% by weight, 0.1% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Example 11]

Instead of using s1, 3-[[2-(methacryloyloxy) ethyl] dimethylammonio] propan-1-sulfonic acid was used to prepare a DMAc solution of a sulfonic acid compound s6 using the method described in Example 1. Next, 1b6 composed of a1 and s6 was prepared as b1 which is the DMAc solution of polyurethane urea polymer B. In 1b6, the amount of sulfonic acid amine salt with a polyurethane urea structure was 1.0 mmol per kilogram of polyurethane urea polymer.
Solutions a1, 1b6 and t1 were uniformly mixed together at 98.9% by weight, 0.1% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Example 12]

Solutions a1, 1b6 and t1 were uniformly mixed together at 59.0% by weight, 40.0% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Example 13]

Solutions a1, 1b4 and t1 were uniformly mixed together at 39.0% by weight, 60.0% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Example 14]

Solutions a1, 1b3 and t1 were uniformly mixed together at 79.0% by weight, 20.0% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Example 15]

First, a2 was prepared as a DMAc solution of polyurethane urea polymer A. Then, 2b1 consisting of a2 and s1 was prepared as b1 which is the DMAc solution of polyurethane urea polymer B. When 2b1 was prepared, a2 was added in an amount of 98% by weight and s1 was added in an amount of 2% by weight, and the components were uniformly mixed together and then mixed at 30°C for one hour. In 2b1, the amount of sulfonic acid amine salt with a polyurethane urea structure was 1.0 mmol per kilogram of polyurethane urea polymer.
Solutions a2, 2b1 and t1 were uniformly mixed together at 98.9% by weight, 0.1% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Example 16]

Solutions a2, 2b1 and t1 were uniformly mixed together at 79.0% by weight, 20.0% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Example 17]

First, 1m1 consisting of a1 and s1 was prepared as m1 which is the DMAc solution of polyurethane urea polymer B. When 1m1 was prepared, a1 was added in an amount of 92% by weight and s1 was added in an amount of 8% by weight, and the components were uniformly mixed together and then mixed at 37°C for 0.5 hours.
Solutions a1, 1m1 and t1 were uniformly mixed together at 98.9% by weight, 0.1% by weight and 1.0% by weight, respectively, to obtain a spinning stock solution, and a 22 dtex, 2 fil multifilament polyurethane elastic fiber was prepared using the method described in Example 1. A compound containing a sulfonic acid amine salt composed of PTSA and diethylamine was detected in an amount of 10 mmol/kg as a sulfonic acid amine salt without a polyurethane structure in the polyurethane urea elastic fiber. The composition of this polyurethane urea elastic fiber is shown in Table 1, and the properties of this fiber are shown in Table 2.

[Example 18]

First, 1m2 consisting of a1 and s1 was prepared as m1 which is the DMAc solution of polyurethane urea polymer B. When 1m1 was prepared, a1 was added in an amount of 96% by weight and s1 was added in an amount of 4% by weight, and the components were uniformly mixed together and then mixed at 20°C for 2 hours.
Solutions a1, 1m1 and t1 were uniformly mixed together at 79.0% by weight, 20.0% by weight and 1.0% by weight, respectively, to obtain a spinning stock solution, and a 22 dtex, 2 fil multifilament polyurethane elastic fiber was prepared using the method described in Example 1. A compound containing a sulfonic acid amine salt composed of PTSA and diethylamine was detected in an amount of 10 mmol/kg as a sulfonic acid amine salt without a polyurethane structure in the polyurethane urea elastic fiber. The composition of this polyurethane urea elastic fiber is shown in Table 1, and the properties of this fiber are shown in Table 2.

[Example 19]

Solutions a1 and 1b1 were uniformly mixed together at 99.9% by weight and 0.1% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Example 20]

Solutions a1 and 1b1 were uniformly mixed together at 80.0% by weight and 20.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Comparative Example 1]

Solutions a1 and t1 were uniformly mixed together at 99.0% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Comparative Example 2]

Solutions a2 and t1 were uniformly mixed together at 99.0% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Comparative Example 3]

Neogermi DFS (didecyldimethylammonium trifluoromethylsulfonate) from Sanyo Chemical Industries, Ltd. was used as a sulfonic acid amine salt-based additive D without a polyurethane urea structure in the preparation of d1 as the DMAc solution of a sulfonic acid amine salt (concentration 35% by mass).
Solutions a1, d1 and t1 were uniformly mixed together at 98.9% by weight, 0.1% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Comparative Example 4]

Solutions a1, d1 and t1 were uniformly mixed together at 79.0% by weight, 20.0% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2.

[Comparative Example 5]

Solutions a1, s1 and t1 were uniformly mixed together at 98.9% by weight, 0.1% by weight and 1.0% by weight, respectively, and then a 22 dtex, 2 fil multifilament polyurethane elastic fiber was obtained immediately using the method described in Example 1. The composition of this polyurethane urea elastic fiber is shown in Table 1, and the properties of this fiber are shown in Table 2. Polyurethane urea polymer B was not detected in the polyurethane urea elastic fiber. However, a compound containing a sulfonic acid amine salt composed of PTSA and ethylenediamine was detected in an amount of 0.1 mmol/kg as a sulfonic acid amine salt without a polyurethane structure.

The composition of this polyurethane urea elastic fiber is shown in Table 1, and the properties of this fiber are shown in Table 2.

[Comparative Example 6]

Solutions a1, s4 and t1 were uniformly mixed together at 98.9% by weight, 0.1% by weight and 1.0% by weight, respectively, and then a 22 dtex, 2 fil multifilament polyurethane elastic fiber was obtained immediately using the method described in Example 1. The composition of this polyurethane urea elastic fiber is shown in Table 1, and the properties of this fiber are shown in Table 2. Polyurethane urea polymer B was not detected in the polyurethane urea elastic fiber. However, a compound containing a sulfonic acid amine salt composed of 2-hydroxy-4-methoxybenzophenone-5-sulfonic acid, diethylamine, and ethylenediamine was detected in an amount of 0.1 mmol/kg as a sulfonic acid amine salt without a polyurethane structure. The composition of this polyurethane urea elastic fiber is shown in Table 1, and the properties of this fiber are shown in Table 2.

[Comparative Example 7]

DMAc solution (35% by mass) sp1 was prepared using a formaldehyde-reduced polymer of phenol sulfonic acid (approximate number average molecular weight: 20,000) as a sulfonic acid polymer instead of a sulfonic acid compound.

Solutions a1, sp1 and t1 were uniformly mixed together at 98.9% by weight, 0.1% by weight and 1.0% by weight, respectively, to obtain a spinning stock solution, and a 22 dtex, 2 fil multifilament polyurethane elastic fiber was prepared using the method described in Example 1. The composition of this polyurethane urea elastic fiber is shown in Table 1, and the properties of this fiber are shown in Table 2. No sulfonic acid amine salt was detected in the polyurethane urea elastic fiber.

[Table 1-1]

| | Polyurethane Urea Polymer A | | Polyurethane Urea Polymer B | | | | Polyurethane Urea Polymer C | | Sulfonic Acid Amine Salt-Based Additive D w/o Polyurethane Urea Amine Sufonic Acid Salt in 1 kg of Structure D Polyurethane Urea Elastic Fiber | | | |
|---|---|---|---|---|---|---|---|---|---|---|---|---|
| | | | Polyurethane Urea Polymer A Base | Sulfonic Acid Compound | | | Polyurethane w/Tertiary Amine in Molecular Structure | | | | | |
| | Solution No. | Amount (wt%) | Solution No. | Solution No. | Mol. Wt. | Amount (wt%) | Solution No. | Amount (wt%) | No. | Amount (wt%) | Sulfonic Acid Amine **Salt** w/Polyurethane Urea Structure (mmol/kg) | Sulfonic Acid Amine **Salt** w/o Polyurethane **Urea** Structure mmol/kg |
| Example 1 | a1 | 98.98 | a1 | s1 | 190.2 | 0.02 | t1 | 1.0 | - | 0 | 0.02 | 0 |
| Example 2 | a1 | 98.9 | a1 | s1 | 190.2 | 0.1 | t1 | 1.0 | - | 0 | 0.1 | 0 |
| Example 3 | a1 | 96.0 | a1 | s1 | 190.2 | 3 | t1 | 1.0 | - | 0 | 3 | 0 |
| Example 4 | a1 | 79.0 | a1 | s1 | 190.2 | 20 | t1 | 1.0 | - | 0 | 20 | 0 |
| Example 5 | a1 | 59.0 | a1 | s1 | 190.2 | 40 | t1 | 1.0 | - | 0 | 40 | 0 |
| Example 6 | a1 | 39.0 | a1 | s1 | 190.2 | 60 | t1 | 1.0 | - | 0 | 60 | 0 |
| Example 7 | a1 | 98.9 | a1 | s2 | 193.2 | 0.1 | t1 | 1.0 | - | 0 | 0.1 | 0 |
| Example 8 | a1 | 98.9 | a1 | s3 | 96.1 | 0.1 | t1 | 1.0 | - | 0 | 0.1 | 0 |
| Example 9 | a1 | 98.9 | a1 | s4 | 326.3 | 0.1 | t1 | 1.0 | - | 0 | 0.1 | 0 |
| Example 10 | a1 | 98.9 | a1 | s5 | 139.2 | 0.1 | t1 | 1.0 | - | 0 | 0.1 | 0 |

[Table 1-2]

| | Polyurethane Urea Polymar A | | Polyurethane Urea Polymer B | | | | Polyurethane Urea Polymer C | | Sulfonic Acid Amine Salt-Basad Additive D w/o Polyurethane Urea Structure D | | Amine Sulfonic Acid Salt in 1 kg of Polyurethane Urea Elastic Fiber | |
|---|---|---|---|---|---|---|---|---|---|---|---|---|
| | Solution No. | Amount (wt%) | Polyurethane Urea Polymer A Base | Sulfonic Acid Compound | | Amount (wt%) | Polyurethane w/Tertiary Amine in Molecular Structure | Amount (wt%) | No. | Amount (wt%) | Sulfonic Acid Amine Salt w/Polyurethane **Urea** Structure (mmol/kg) | Sulfonic Acid Amine Salt w/o Polyurethane Urea Structure (mmol/kg) |
| | | | Solution No. | Solution No. | Mol. Wt. | | Solution No. | | | | | |
| Example 11 | a1 | 98.9 | a1 | s6 | 279.4 | 0.1 | t1 | 1.0 | - | 0 | 0.1 | 0 |
| Example 12 | a1 | 59.0 | a1 | s6 | 279.4 | 40 | t1 | 1.0 | - | 0 | 40 | 0 |
| Example 13 | a1 | 39.0 | a1 | s4 | 326.3 | 60 | t1 | 1.0 | - | 0 | 60 | 0 |
| Example 14 | a1 | 79.0 | a1 | s3 | 96.1 | 20 | t1 | 1.0 | - | 0 | 20 | 0 |
| Example 15 | a2 | 98.9 | a2 | s1 | 190.2 | 0.1 | t1 | 1.0 | - | 0 | 0.1 | 0 |
| Example 16 | a2 | 79.0 | a2 | s1 | 190.2 | 20 | t1 | 1.0 | - | 0 | *20* | 0 |
| Example 17 | a1 | 98.9 | a1 | s1 | 190.2 | 0.1 | t1 | 1.0 | - | 0 | 0.1 | 10 |
| Example 18 | a1 | 79.0 | a1 | s1 | 190.2 | 20 | t1 | 1.0 | - | 0 | 20 | 10 |
| Example 19 | at | 99.9 | a1 | s1 | 190.2 | 0.1 | - | 0 | - | 0 | 0.1 | 0 |
| Example 20 | a1 | 80.0 | a1 | s1 | 150.2 | 20 | - | 0 | - | 0 | 20 | 0 |

[Table 1-3]

| | Polyurethane Urea Polymer A | | Polyurethane Urea Polymer B | | | | Polyurethane Urea Polymer C | | | Sulfonic Acid Amine Salt-Based Amine Sulfonic Acid Salt in 1 kg of Additive O w/o Polyurethane Urea Polyurethane Urea Elastic Fiber Structure D | | | |
|---|---|---|---|---|---|---|---|---|---|---|---|---|---|
| | | | Polyurethane Urea Polymer A Base | Sulfonic Acid Compound | | Amount (wt%) | Polyurethane w/Tertiary Amine in Molecular Structure | | Amount (wt%) | | Amount (wt%) | Sulfonic Acid Amine Salt w/Polyurethane Urea Structure (mmol/kg) | Sufonic Acid Amine Salt w/o Polyurethane Urea Structure (mmol/kg) |
| | Solution No. | Amount (wt%) | Solution No. | Solution No. | Mol. Wt. | | Solution No. | | | No. | | | |
| C. Ex. 1 | a1 | 99.0 | - | - | - | 0 | t1 | | 1.0 | - | 0 | 0 | 0 |
| C. Ex. 2 | a2 | 99.0 | - | - | - | 0 | t1 | | 1.0 | - | 0 | 0 | 0 |
| C. Ex. 3 | a1 | 98.9 | - | - | - | 0 | t1 | | 1.0 | d1 | 0.1 | 0 | 0.2 |
| C. Ex. 4 | a1 | 79.0 | - | - | - | 0 | t1 | | 1.0 | d1 | 20 | 0 | 42 |
| C. Ex. 5 | a1 | 98.9 | - | - | - | 0 | t1 | | 1.0 | - | 0 | 0 | 0.1 |
| C. Ex. 6 | a1 | 98.9 | - | - | - | 0 | t1 | | 1.0 | - | 0 | 0 | 0.1 |
| C. Ex. 7 | a1 | 98.9 | - | - | - | 0 | t1 | | 1.0 | - | 0 | 0 | 0 |

17

[Table 2-1]

| | Basic Properties of Elastic Fiber | | | Stability of Elastic Fiber Over Time | | | | Spinnability of Elastic Fiber |
|---|---|---|---|---|---|---|---|---|
| | Breaking Strength [cN] | Elongation at Break [%] | Permanent Distortion [%] | Day-to-Day Change in Actual Usage Range | | Day-to-Day Change in Permanent Distortion | | |
| | | | | % | Eval. | % | Eval. | |
| Ex. 1 | 24 | 512 | 22 | 124% | ○ | 87% | ○ | ◎ |
| Ex. 2 | 24 | 532 | 21 | 119% | ◎ | 97% | ◎ | ◎ |
| Ex. 3 | 25 | 486 | 24 | 117% | ◎ | 95% | ◎ | ◎ |
| Ex. 4 | 26 | 477 | 24 | 115% | ◎ | 93% | ◎ | ◎ |
| Ex. 5 | 26 | 481 | 24 | 114% | ◎ | 88% | ○ | ◎ |
| Ex. 6 | 26 | 478 | 22 | 111% | ◎ | 86% | ○ | ◎ |
| Ex. 7 | 24 | 498 | 21 | 118% | ◎ | 94% | ◎ | ◎ |
| Ex. 8 | 25 | 528 | 22 | 117% | ◎ | 97% | ◎ | ◎ |
| Ex. 9 | 24 | 489 | 21 | 122% | ○ | 87% | ○ | ◎ |
| Ex. 10 | 25 | 519 | 23 | 119% | ◎ | 94% | ◎ | ◎ |

[Table 2-2]

| | Basic Properties of Elastic Fiber | | | Stability of Elastic Fiber Over Time | | | | Spinnability of Elastic Fiber |
|---|---|---|---|---|---|---|---|---|
| | Breaking Strength [cN] | Elongation at Break [%] | Permanent Distortion [%] | Day-to-Day Change in Actual Usage Range | | Day-to-Day Change in Permanent Distortion | | |
| | | | | % | Eval. | % | Eval. | |
| Ex. 10 | 25 | 519 | 23 | 119% | ◎ | 94% | ◎ | ◎ |
| Ex. 11 | 25 | 501 | 22 | 122% | ○ | 89% | ○ | ◎ |
| Ex. 12 | 26 | 487 | 23 | 119% | ◎ | 91% | ◎ | ◎ |
| Ex. 13 | 25 | 513 | 21 | 113% | ◎ | 87% | ○ | ◎ |
| Ex. 14 | 24 | 491 | 25 | 112% | ◎ | 93% | ◎ | ◎ |
| Ex. 15 | 29 | 481 | 17 | 121% | ○ | 89% | ○ | ◎ |
| Ex. 16 | 31 | 475 | 15 | 119% | ◎ | 93% | ◎ | ◎ |
| Ex. 17 | 24 | 535 | 21 | 118% | ◎ | 95% | ◎ | ◎ |
| Ex. 18 | 25 | 481 | 23 | 116% | ◎ | 94% | ◎ | ◎ |
| Ex. 19 | 24 | 530 | 22 | 117% | ◎ | 94% | ◎ | ○ |
| Ex. 20 | 25 | 485 | 24 | 115% | ◎ | 93% | ◎ | ○ |

[Table 2-3]

| | Basic Properties of Elastic Fiber | | | Stability of Elastic Fiber Over Time | | | | Spinnability of Elastic Fiber |
|---|---|---|---|---|---|---|---|---|
| | Breaking Strength [cN] | Elongation at Break [%] | Permanent Distortion [%] | Day-to-Day Change in Actual Usage Range | | Day-to-Day Change in Permanent Distortion | | |
| | | | | % | Eval. | % | Eval. | |
| C. Ex. 1 | 17 | 497 | 23 | 140% | × | 76% | × | ○ |
| C. Ex. 2 | 27 | 477 | 16 | 139% | × | 79% | × | ○ |

(continued)

| | Basic Properties of Elastic Fiber | | | Stability of Elastic Fiber Over Time | | | | Spinnability of Elastic Fiber |
|---|---|---|---|---|---|---|---|---|
| | Breaking Strength [cN] | Elongation at Break [%] | Permanent Distortion [%] | Day-to-Day Change in Actual Usage Range | | Day-to-Day Change in Permanent Distortion | | |
| | | | | % | Eval. | % | Eval. | |
| C. Ex. 3 | 19 | 509 | 23 | 150% | × | 73% | × | ○ |
| C. Ex. 4 | 22 | 481 | 25 | 146% | × | 69% | × | ○ |
| C. Ex. 5 | 21 | 502 | 22 | 143% | × | 71% | × | ○ |
| C. Ex. 6 | 22 | 461 | 24 | 147% | × | 68% | × | ○ |
| C. Ex. 7 | 23 | 445 | 25 | 151% | × | 71% | × | ○ |

[Table 1]

| | Polyurethane Urea Polymer A | | Polyurethane Urea Polymer B | | | | Polyurethane Urea Polymer C | | Sulfonic Acid Amine Salt-Based Additive D w/o Polyurethane Urea Structure D | | Amine Sulfonic Acid Salt in 1 kg of Polyurethane Urea Elastic Fiber | |
|---|---|---|---|---|---|---|---|---|---|---|---|---|
| | Solution No. | Amount (wt%) | Polyurethane Urea Polymer A Base | Sulfonic Acid Compound | | Amount (wt%) | Polyurethane w/Tertiary Amine in Molecular Structure | Amount (wt%) | No. | Amount (wt%) | Sulfonic Acid Amine Salt w/Polyurethane Urea Structure (mmol/kg) | Sulfonic Acid Amine Salt w/o Polyurethane Urea Structure (mmol/kg) |
| | | | Solution No. | Solution No. | Mol. Wt. | | Solution No, | | | | | |
| Ex. 1 | a1 | 98.98 | a1 | s1 | 190.2 | 0.02 | t1 | 1..0 | - | 0 | 0.02 | 0 |
| Ex. 2 | a1 | 98.9 | a1 | a1 | 190.2 | 0.1 | t1 | 1.0 | - | 0 | 0.1 | 0 |
| Ex. 3 | a1 | 96.0 | a1 | s1 | 190.2 | 3 | t1 | 1.0 | - | 0 | 3 | 0 |
| Ex. 4 | a1 | 79.0 | a1 | s1 | 190.2 | 20 | t1 | 1.0 | - | 0 | 20 | 0 |
| Ex. 5 | a1 | 59.0 | a1 | s1 | 190.2 | 40 | t1 | 1.0 | - | 0 | 40 | 0 |
| Ex. 6 | a1 | 39.0 | a1 | s1 | 190.2 | 60 | t1 | 1.0 | - | 0 | 60 | 0 |
| Ex. 7 | at | 98.9 | at | s2 | 195.2 | 0.1 | t1 | 1.0 | - | 0 | 0.1 | 0 |
| Ex. 8 | a1 | 98.9 | a1 | s3 | 96.1 | 0.1 | t1 | 1.0 | - | 0 | 0.1 | 0 |
| Ex. 9 | a1 | 98.9 | a1 | s4 | 326.3 | 0.1 | t1 | 1.0 | - | 0 | 0.1 | 0 |
| Ex. 10 | at | 98.9 | a1 | s5 | 139.2 | 0.1 | t1 | 1.0 | - | 0 | 0.1 | 0 |
| Ex. 11 | a1 | 98.9 | a1 | s6 | 279.4 | 0.1 | t1 | 1.0 | - | 0 | 0.1 | 0 |
| Ex. 12 | a1 | 59.0 | a1 | s6 | 279.4 | 40 | t1 | 1.0 | - | 0 | 40 | 0 |
| Ex.13 | at | 39.0 | a1 | s4 | 326.3 | 60 | t1 | 1.0 | - | 0 | 60 | 0 |
| Ex.14 | a1 | 79.0 | a1 | s3 | 96.1 | 20 | t1 | 1.0 | - | 0 | 20 | 0 |
| Ex. 15 | a2 | 98.9 | a2 | s1 | 130.2 | 0.1 | t1 | 1.0 | - | 0 | 0.1 | 0 |
| Ex. 16 | a2 | 79.0 | a2 | s1 | 190.2 | 20 | t1 | 1.0 | - | 0 | 20 | 0 |
| Ex. 17 | at | 98.9 | a1 | s1 | 190.2 | 0.1 | t1 | 1.0 | - | 0 | 0.1 | 10 |
| Ex. 18 | a1 | 79.0 | a1 | s1 | 190.2 | 20 | t1 | 1.0 | - | 0 | 20 | 10 |

EP 4 232 622 B1

| | Polyurethane Urea Polymer A | | Polyurethane Urea Polymer B | | | | Polyurethane Urea Polymer C | | Sulfonic Acid Amine Salt-Based Additive D w/o Polyurethane Urea Structure D | | Amine Sulfonic Acid Salt in 1 kg of Polyurethane Urea Elastic Fiber | |
| | | | Polyurethane Urea Polymer A Base | Sulfonic Acid Compound | | Amount (wt%) | Polyurethane w/Tertiary Amine in Molecular Structure | Amount (wt%) | No. | Amount (wt%) | Sulfonic Acid Amine Salt w/Polyurethane Urea Structure (mmol/kg) | Sulfonic Acid Amine Salt w/o Polyurethane Urea Structure (mmol/kg) |
| | Solution No. | Amount (wt%) | Solution No. | Solution No. | Mol. Wt. | | Solution No, | | | | | |
|---|---|---|---|---|---|---|---|---|---|---|---|---|
| Ex. 19 | a1 | 99.9 | a1 | s1 | 190.2 | 0.1 | - | 0 | - | 0 | 0.1 | 0 |
| Ex. 20 | a1 | 80.0 | a1 | s1 | 190.2 | 20 | - | 0 | - | 0 | 20 | 0 |
| C. Ex. 1 | a1 | 99.0 | - | - | - | 0 | t1 | 1.0 | - | 0 | 0 | 0 |
| C. Ex. 2 | a2 | 99.0 | | - | - | 0 | t1 | 1.0 | - | 0 | 0 | 0 |
| C. Ex. 3 | a1 | 98.9 | - | - | - | 0 | t1 | 1.0 | d1 | 0.1 | 0 | 0.2 |
| C. Ex. 4 | a1 | 79.0 | - | - | - | 0 | t1 | 1.0 | d1 | 20 | 0 | 42 |
| C. Ex. 5 | a1 | 98.9 | - | - | - | 0 | t1 | 1.0 | - | 0 | 0 | 0.1 |
| C. Ex. 6 | a1 | 98.9 | - | - | - | 0 | t1 | 1.0 | - | 0 | 0 | 0.1 |
| C. Ex. 7 | at | 98.9 | - | - | - | 0 | t1 | 1.0 | - | 0 | 0 | 0 |

[Table 2]

| | Basic Properties of Elastic Fiber | | | Stability of Elastic Fiber Over Time | | | | Spinnability of Elastic Fiber |
|---|---|---|---|---|---|---|---|---|
| | Breaking Strength [cN] | Elongation at Break [%] | Permanent Distortion [%] | Day-to-Day Change in Actual Usage Range | | Day-to-Day Change in Permanent Distortion | | |
| | | | | % | Eval. | % | Eval. | |
| Ex. 1 | 24 | 512 | 22 | 124% | ○ | 87% | ○ | ○ |
| Ex. 2 | 24 | 532 | 21 | 119% | ○ | 97% | ○ | ○ |
| Ex. 3 | 25 | 486 | 24 | 117% | ○ | 95% | ○ | ○ |
| Ex. 4 | 26 | 477 | 24 | 115% | ○ | 93% | ○ | ○ |
| Ex. 5 | 26 | 481 | 24 | 114% | ○ | 88% | ○ | ○ |
| Ex. 6 | 26 | 478 | 22 | 111% | ○ | 86% | ○ | ○ |
| Ex. 7 | 24 | 498 | 21 | 118% | ○ | 94% | ○ | ○ |
| Ex. 8 | 25 | 528 | 22 | 117% | ○ | 97% | ○ | ○ |
| Ex. 9 | 24 | 489 | 21 | 122% | ○ | 87% | ○ | ○ |
| Ex. 10 | 25 | 519 | 23 | 119% | ○ | 94% | ○ | ○ |
| Ex. 11 | 25 | 501 | 22 | 122% | ○ | 89% | ○ | ○ |
| Ex. 12 | 26 | 487 | 23 | 119% | ○ | 91% | ○ | ○ |
| Ex. 13 | 25 | 513 | 21 | 113% | ○ | 87% | ○ | ○ |
| Ex. 14 | 24 | 491 | 25 | 112% | ○ | 93% | ○ | ○ |
| Ex. 15 | 29 | 481 | 17 | 121% | ○ | 89% | ○ | ○ |
| Ex. 16 | 31 | 475 | 15 | 119% | ○ | 93% | ○ | ○ |
| Ex. 17 | 24 | 535 | 21 | 118% | ○ | 95% | ○ | ○ |
| Ex. 18 | 25 | 481 | 23 | 116% | ○ | 94% | ○ | ○ |
| Ex. 19 | 24 | 530 | 22 | 117% | ○ | 94% | ○ | ○ |
| Er. 20 | 25 | 485 | 24 | 115% | ○ | 93% | ○ | ○ |
| C. Ex. 1 | 17 | 497 | 23 | 140% | × | 75% | × | ○ |
| C. Ex. 2 | 27 | 477 | 16 | 139% | × | 79% | x | ○ |
| C. Ex. 3 | 19 | 509 | 23 | 150% | × | 73% | × | ○ |
| C. Ex. 4 | 22 | 481 | 25 | 146% | × | 69% | × | ○ |
| C. Ex. 5 | 21 | 502 | 22 | 143% | x | 71% | x | ○ |
| C. Ex. 6 | 22 | 461 | 24 | 147% | × | 68% | × | ○ |
| C. Ex. 7 | 23 | 445 | 25 | 151% | × | 71% | × | ○ |

[Industrial Applicability]

Because the polyurethane urea elastic fibers of the present invention have high tensile strength and a low residual strain rate, clothes using these elastic fibers have a good fit and feel, and are easy to take off. Because these elastic fibers also have stable mechanical properties over time, they are easy to process in the covering, knitting, and weaving process, whether used alone or in combination with other types of fibers for higher-order processing.

Because polyurethane urea elastic fibers of the present invention have these excellent properties, they can be used alone or in combination with other types of fibers to obtain excellent stretch fabrics, and are suitable for knitting, weaving and cord processing. Specific applications in which these fibers can be used include in tightening materials for various textile products such as socks, stockings, circular knits, tricot knits, swimwear, ski pants, work clothes, firefighting clothes, golf pants, wet suits, brassieres, girdles, gloves and socks, tightening materials for preventing leakage from sanitary products such as disposable diapers, tightening materials for waterproof materials, imitation bait, artificial flowers, electrical insulation, wiping cloths, copier cleaners, and gaskets.

**Claims**

1. A polyurethane urea elastic fiber comprising:

   polyurethane urea polymer A having a molecular chain using a polymer diol, a diisocyanate, and an organic amine as starting materials, and having a primary or
   secondary amino group at both ends of the molecular chain; and
   polyurethane urea polymer B having a molecular chain using a polymer diol, a diisocyanate, and an organic amine, and having a sulfonic acid amine salt on at least one end of the molecular chain, wherein polyurethane urea polymer B is a polyurethane urea polymer having a sulfonic acid compound with a molecular weight of 96 or more and 300 or less bonded to at least one of a primary or a secondary amino group present at the end of the molecular chain of polyurethane urea polymer A.

2. A polyurethane urea elastic fiber according to claim 1, wherein the total amount of sulfonic acid amine salt per kilogram of polyurethane urea elastic fiber is 0.01 mmol or more and 50 mmol or less.

3. A polyurethane urea elastic fiber according to any one of claims 1 or 2, further comprising polyurethane polymer C having a tertiary amine in the molecular structure, wherein the amount of polyurethane polymer C is 0.1% by weight or more and 10% by weight or less.

4. A method for producing a polyurethane urea elastic fiber, the method comprising: dry spinning a spinning solution containing polyurethane urea polymer A having a molecular chain using a polymer diol, a diisocyanate, and an organic amine as starting materials, and polyurethane urea polymer B having a molecular chain using a polymer diol, a diisocyanate, and an organic amine, and having a sulfonic acid amine salt on at least one end of the molecular chain, wherein:

   (a) spinning stock solution a containing polyurethane urea polymer A having a molecular chain using a polymer diol, a diisocyanate, and an organic amine as starting materials, and having an amino group at both ends of the molecular chain is prepared, and a sulfonic acid compound with a molecular weight of 96 or more and 300 or less is added to spinning stock solution a and reacted to turn some of polyurethane urea polymer A in spinning stock solution a into polyurethane urea polymer B and obtain a spinning solution; or
   (b) spinning stock solution a containing polyurethane urea polymer A having a molecular chain using a polymer diol, a diisocyanate, and an organic amine as starting materials, and having an amino group at both ends of the molecular chain is prepared, some of spinning stock solution a is divided, a sulfonic acid compound with a molecular weight of 96 or more and 300 is added to and reacted with one of the divided portions to prepare spinning stock solution b in which polyurethane urea polymer B has been produced, and

   a spinning solution obtained by mixing together spinning stock solution a and spinning stock solution b is dry spun.

**Patentansprüche**

1. Elastische Polyurethanharnstofffaser umfassend:

   Polyurethanharnstoffpolymer A mit einer Molekülkette unter Verwendung eines Polymerdiols, eines Diisocyanats und eines organischen Amins als Ausgangsmaterialien und mit einer primären oder sekundären Aminogruppe an beiden Enden der Molekülkette; und
   Polyurethanharnstoffpolymer B mit einer Molekülkette unter Verwendung eines Polymerdiols, eines Diisocyanats und eines organischen Amins, und mit einem Sulfonsäureaminsalz an wenigstens einem Ende der Molekülkette, wobei das Polyurethanharnstoffpolymer B ein Polyurethanharnstoffpolymer mit einer Sulfonsäureverbindung mit einem Molekulargewicht von 96 oder mehr und 300 oder weniger ist, die an wenigstens eine von einer primären oder einer sekundären Aminogruppe gebunden ist, die an dem Ende der Molekülkette des Polyurethanharnstoffpolymers A vorhanden ist.

**2.** Elastische Polyurethanharnstofffaser nach Anspruch 1, wobei die Gesamtmenge an Sulfonsäureaminsalz pro Kilogramm an elastischer Polyurethanharnstofffaser 0,01 mmol oder mehr und 50 mmol oder weniger beträgt.

**3.** Elastische Polyurethanharnstofffaser nach einem der Ansprüche 1 oder 2, ferner umfassend Polyurethanpolymer C mit einem tertiären Amin in der Molekülstruktur, wobei die Menge an Polyurethanpolymer C 0,1 Gew.-% oder mehr und 10 Gew.-% oder weniger beträgt.

**4.** Verfahren zur Herstellung einer elastischen Polyurethanharnstofffaser, wobei das Verfahren umfasst:

Trockenspinnen einer Spinnlösung, die Polyurethanharnstoffpolymer A mit einer Molekülkette unter Verwendung eines Polymerdiols, eines Diisocyanats und eines organischen Amins als Ausgangsmaterialien enthält, und Polyurethanharnstoffpolymer B mit einer Molekülkette unter Verwendung eines Polymerdiols, eines Diisocyanats und eines organischen Amins und mit einem Sulfonsäureaminsalz an wenigstens einem Ende der Molekülkette, wobei:

(a) Spinnstoff-Vorratslösung a, die Polyurethanharnstoffpolymer A mit einer Molekülkette unter Verwendung eines Polymerdiols, eines Diisocyanats und eines organischen Amins als Ausgangsmaterialien und mit einer Aminogruppe an beiden Enden der Molekülkette enthält, hergestellt wird, und eine Sulfonsäureverbindung mit einem Molekulargewicht von 96 oder mehr und 300 oder weniger zu der Spinnstoff-Vorratslösung a zugegeben und umgesetzt wird, um einen Teil des Polyurethanharnstoffpolymers A in der Spinnstoff-Vorratslösung a in ein Polyurethanharnstoffpolymer B umzuwandeln und eine Spinnlösung zu erhalten; oder
(b) Spinnstoff-Vorratslösung a, die Polyurethanharnstoffpolymer A mit einer Molekülkette unter Verwendung eines Polymerdiols, eines Diisocyanats und eines organischen Amins als Ausgangsmaterialien und mit einer Aminogruppe an beiden Enden der Molekülkette enthält, hergestellt wird, ein Teil der Spinnstoff-Vorratslösung a getrennt wird, eine Sulfonsäureverbindung mit einem Molekulargewicht von 96 oder mehr und 300 zu einer der getrennten Portionen zugegeben und damit umgesetzt wird, um eine Spinnstoff-Vorratslösung b herzustellen, in der Polyurethanharnstoffpolymer B hergestellt worden ist, und

eine Spinnlösung, erhalten durch Zusammenmischen der Spinnstoff-Vorratslösung a und der Spinnstoff-Vorratslösung b, trocken versponnen wird.

## Revendications

**1.** Fibre élastique de polyuréthane urée comprenant :

un polymère de polyuréthane urée A ayant une chaîne moléculaire utilisant un diol polymère, un diisocyanate et une amine organique comme matériaux de départ, et
ayant un groupe amino primaire ou secondaire au niveau des deux extrémités de la chaîne moléculaire ; et
un polymère de polyuréthane urée B ayant chaîne moléculaire utilisant un diol polymère, un diisocyanate, et une amine organique, et ayant un sel d'amine d'acide sulfonique sur au moins une extrémité de la chaîne moléculaire, dans laquelle le polymère de polyuréthane urée B est un polymère de polyuréthane urée ayant un composé d'acide sulfonique ayant un poids moléculaire de 96 ou plus et 300 ou moins lié à au moins un groupe amino primaire ou secondaire présent à l'extrémité de la chaîne moléculaire du polymère de polyuréthane urée A.

**2.** Fibre élastique de polyuréthane urée selon la revendication 1, dans laquelle la quantité totale de sel d'amine d'acide sulfonique par kilogramme de fibre élastique de polyuréthane urée est de 0,01 mmole ou plus et de 50 mmole ou moins.

**3.** Fibre élastique de polyuréthane urée selon l'une quelconque des revendications 1 ou 2, comprenant en outre un polymère de polyuréthane C ayant une amine tertiaire dans la structure moléculaire, dans laquelle la quantité de polymère de polyuréthane C est de 0,1 % en poids ou plus et de 10 % en poids ou moins.

**4.** Procédé de production d'une fibre élastique de polyuréthane urée, le procédé comprenant : le filage à sec d'une solution de filage contenant un polymère de polyuréthane urée A ayant une chaîne moléculaire utilisant un polymère diol, un diisocyanate et une amine organique comme matériaux de départ, et un polymère de polyuréthane urée B ayant une chaîne moléculaire utilisant un polymère diol, un diisocyanate et une amine organique, et ayant un sel d'amine d'acide sulfonique sur au moins une extrémité de la chaîne moléculaire, dans lequel :

(a) une solution de base de filage a contenant un polymère de polyuréthane urée A ayant une chaîne moléculaire utilisant un polymère diol, un diisocyanate, et une amine organique comme matériaux de départ, et ayant un groupe amino au niveau des deux extrémités de la chaîne moléculaire est préparée, et un composé d'acide sulfonique ayant un poids moléculaire de 96 ou plus et de 300 ou moins est ajouté à la solution de base de filage a et mis à réagir pour transformer une partie du polymère de polyuréthane urée A dans la solution de base de filage a en un polymère de polyuréthane urée B et obtenir une solution de filage ; ou

(b) une solution de base de filage a contenant un polymère de polyuréthane urée A ayant une chaîne moléculaire utilisant un polymère diol, un diisocyanate, et une amine organique comme matériaux de départ, et ayant un groupe amino au niveau des deux extrémités de la chaîne moléculaire est préparé, une partie de la solution de base de filage a est divisée, un composé d'acide sulfonique ayant un poids moléculaire de 96 ou plus et 300 est ajouté à l'une des parties divisées et mis à réagir avec l'une des parties divisées pour préparer une solution de base de filage b dans laquelle le polymère de polyuréthane urée B a été produit, et une solution de filage obtenue en mélangeant ensemble la solution de base de filage a et la solution de base de filage b est filée à sec.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11081045 A
- JP 2003155624 A
- JP 2011144491 A
- US 2020017996 A
- JP 2615131 B
- JP S61026612 A
- JP H02289516 A